# FASCICULE DE BREVET EUROPEEN

(11) **EP 0 946 114 B1**
(45) Date de publication et mention de la délivrance du brevet: **28.08.2002**
(21) Numéro de dépôt: 97952071.5
(22) Date de dépôt: 16.12.1997
(51) Int. Cl.: A23L 1/325, C11B 1/00, A23B 4/06

(54) **PROCEDE ET INSTALLATION D'EXTRACTION D'HUILE DE POISSON ET PRODUITS OBTENUS**
VERFAHREN SOWIE ANLAGE ZUR EXTRAKTION VON FISCHÖL UND DARAUS HERGESTELLTE PRODUKTE
METHOD AND PLANT FOR EXTRACTING FISH OIL AND RESULTING PRODUCTS

(30) Priorité: 17.12.1996 FR 9615503
(43) Date de publication de la demande: 06.10.1999
(73) Titulaire: Sea Oil, 50100 Cherbourg (FR)
(72) Inventeur: BARRIER, Pascale, F-50110 Tourlaville (FR); ROUSSEAU, Jean-Yves, F-50120 Equeurdreville (FR)
(74) Mandataire: Cabinet HERRBURGER
(86) Numéro de dépôt international: FR9702312
(87) Numéro de publication internationale: WO98026674

(56) Documents cités:
- EP-A- 0 301 795
- WO-A-87/00733
- WO-A-91/03950
- DE-A- 4 429 837
- GB-A- 1 318 021
- GB-A- 2 244 999
- PATENT ABSTRACTS OF JAPAN vol. 008, no. 098 (C-221), 9 mai 1984 -& JP 59 014776 A (SANKIYOU SETSUKEI JIMUSHIYO:KK), 25 janvier 1984,

## Description

La présente invention concerne un procédé d'extraction d'huile de poisson.

L'invention concerne également une installation pour la mise en oeuvre d'un tel procédé ainsi que les produits obtenus.

On connaît différents procédés de fabrication de farine et d'huile de poisson. Ces procédés plus ou moins complexes, qui traitent différents types de poissons donnant des huiles comme des sardines, des anchois, des capelans et des harengs ou des menhadens, suivant les pays, consistent en général à cuire la matière première (c'est-à-dire les poissons), puis à transférer le produit de cuisson dans un décanteur pour éliminer l'eau ; celle-ci est traitée pour recueillir des huiles et la matière solide est introduite dans une presse qui sépare le liquide et les matières solides. Les matières solides sont séchées et constituent des farines de poisson utilisées par exemple dans l'alimentation animale.

Les liquides recueillis suivent différents chemins de traitement pour subir la séparation des boues et des huiles ainsi que des eaux à rejeter.

Ce procédé de traitement a l'inconvénient de ne recueillir que l'huile, les matières solides étant des produits de qualité très inférieure, ne convenant que dans certaines conditions pour l'alimentation animale.

La présente invention a pour but de créer un procédé et une installation de fabrication d'huile de poisson, permettant de valoriser les produits et de recueillir non seulement de l'huile mais également des matières solides de qualité, utilisables dans l'alimentation humaine.

A cet effet, l'invention concerne un procédé du type défini ci-dessus, caractérisé en ce que :
a) on prépare le poisson en lui enlevant la tête et les viscères (on peut aussi utiliser des déchets de poisson : déchets de filetage, têtes de poissons),
b) on refroidit le poisson à basse température positive et on le maintient à une température inférieure à 15°C pendant toutes les opérations effectuées alors,
c) on forme une chair que l'on nettoie en séparant les arêtes et les peaux,
d) on ajoute de l'eau à la chair nettoyée et on mélange,
e) on décante le mélange en une phase liquide et une phase solide,
g) on conditionne la phase solide (chair) et on la surgèle,
h) on sépare l'huile de la phase liquide.

Le procédé selon l'invention utilise des poissons nettoyés, c'est-à-dire éviscérés et étêtés. La chair du poisson est transformée en restant à une température relativement basse de l'ordre de quelques degrés de froid positif.

Cette chair est alors traitée pour en séparer l'huile et les matières solides, déshuilées, dans lesquelles il ne reste plus que très peu (de l'ordre de 3 %) d'huile. Ces matières solides sont très intéressantes dans l'industrie agro-alimentaire pour les plats cuisinés de la mer. Cette matière est parfaitement préservée bactériologiquement et constitue une source de matières premières très intéressante pour l'industrie agro-alimentaire à cause de sa faible teneur en matière grasse.

Suivant d'autres caractéristiques avantageuses du procédé :
- on ajoute entre 10 et 40 % d'eau à la chair nettoyée,
- la chair est conditionnée dans des sachets que l'on surgèle,
- la phase liquide est stockée dans un silo à froid,
- la phase liquide est séparée en huile et en boue par au moins un passage de séparation,
- on effectue éventuellement deux passages de la phase liquide pour séparer les boues et recueillir l'huile que l'on conditionne par inertage et que l'on stocke à froid.

La présente invention concerne également une installation pour la mise en oeuvre d'un tel procédé, cette installation étant caractérisée en ce qu'elle comprend une presse à chair recevant les poissons étêtés et éviscérés ou des déchets de filetage ou des têtes de poisson, pour former un mélange dont la presse à chair sépare les chairs d'une part et d'autre part les arêtes et les peaux, un mélangeur muni d'une alimentation en eau froide recevant la chair, un décanteur recevant la chair additionnée d'eau du mélangeur pour séparer la phase liquide chargée et la chair déshuilée, une ensacheuse et des moyens de congélation de la chair ainsi qu'un silo de stockage de la phase liquide et un séparateur huile/boue.

L'invention concerne également les produits obtenus par la mise en oeuvre du procédé ou de l'installation et, en particulier, la chair déshuilée, destinée à des applications dans les industries agro-alimentaires.

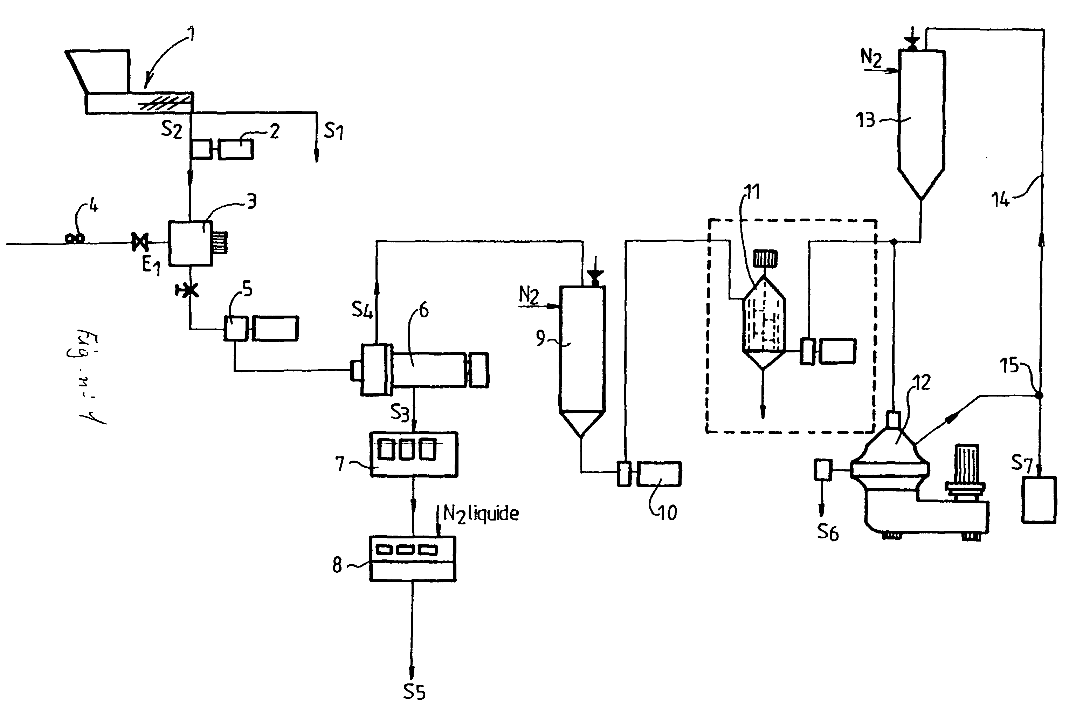

La présente invention sera décrite ci-après de manière plus détaillée à l'aide de l'unique figure annexée explicitant le procédé d'extraction d'huile de poisson et de chair déshuilée.

Selon la figure, l'installation comprend une presse à chair 1 qui reçoit les poissons étêtés et éviscérés. Ces poissons sont fournis à une température relativement basse, de l'ordre de quelques degrés de froid positif.

La presse à chair 1 est par exemple constituée d'une vis sans fin et d'un tamis ; elle fait passer la chair à travers le tamis en retenant les arêtes et les peaux, qui sont sortis de la presse à chair par l'évacuation S1. Il s'agit des déchets bruts, éventuellement traités et séchés pour les engrais.

La chair fournie par la presse à chair 1 à la sortie S2 est transmise par une pompe 2, par exemple une pompe volumétrique à débit variable, à un mélangeur 3 qui homogénéise la chair en lui ajoutant de l'eau froide fournie par une pompe doseuse 4 à son entrée E1. Le pourcentage d'eau froide ajoutée dépend de la viscosité de la chair. Ce pourcentage est compris entre 10 % et 40 %. L'eau est à une température inférieure à 15°C.

Le mélange ainsi homogénéisé est fourni par une pompe volumétrique 5 à un décanteur 6. Ce décanteur sépare la phase solide et la phase liquide.

La phase solide est constituée par la chair déshuilée. Cette chair déshuilée est fournie par la sortie S3 à une ensacheuse 7 qui conditionne la chair en sachets.

La chair ainsi ensachée passe dans un surgélateur 8, par exemple un surgélateur à plaques, qui surgèle les sachets de chair. Le surgélateur 8 est en atmosphère inerte et, pour cela, il reçoit de l'azote liquide fournissant le froid et réalisant l'atmosphère inerte.

En sortie S5, les sachets de chair surgelée sont envoyés au stockage. Ce stockage se fait avec un froid négatif.

Sur toute la ligne de fabrication, entre la presse à chair 1 et le stockage de la chair surgelée, on maintient la chair à une température basse toujours inférieure à 15°C.

La phase liquide sortant du décanteur 5 par la sortie S4, est une phase de liquide chargée d'huile. Ce liquide est stocké dans un silo 9 sous atmosphère inerte assurée par l'introduction d'azote gazeux N₂.

Le liquide stocké dans le silo 9 en est extrait par une pompe volumétrique 10 qui fournit le liquide éventuellement chargé à un séparateur à tamis à brosses rotatives 11.

Toutefois, en général, la phase liquide provenant du silo 9 est chargée directement dans un séparateur 12 qui élimine les boues par la sortie S6 pour en séparer l'huile (sortie S7).

En sortie, l'huile brute est stockée dans des fûts à une température de l'ordre de 8 à 10°C. L'eau chargée de boues est traitée pour être rejetée.

L'huile peut, suivant le cas, subir plusieurs passages. Entre deux passages, elle est recueillie dans un silo 13 placé dans un circuit 14 commandé par une vanne 15 qui, soit assure la sortie de l'huile, soit son recyclage.

Si la clarification de l'huile après un premier passage dans le séparateur n'est pas suffisante, on recueille l'huile en sortie du séparateur 12 dans le silo 13 par le circuit 14. Le stockage dans le silo 13 se fait sous une atmosphère d'azote, pour réduire les risques d'oxydation. Puis, on repasse l'huile du silo 13 dans le séparateur 12 ce qui évite un second séparateur.

## Revendications

1. Procédé d'extraction d'huile de poisson,
**caractérisé en ce que**
a) on prépare le poisson en lui enlevant la tête et les viscères,
b) on refroidit le poisson à basse température positive et on le maintient à une température inférieure à 15°C pendant toutes les opérations effectuées alors,
c) on forme une chair que l'on nettoie en séparant les arêtes et les peaux,
d) on ajoute de l'eau à la chair nettoyée et on mélange,
e) on décante le mélange en une phase liquide et une phase solide,
g) on conditionne la phase solide (chair) et on la surgèle,
h) on sépare l'huile de la phase liquide.

2. Procédé selon la revendication 1,
**caractérisé en ce que**
on ajoute entre 10 et 40 % d'eau à la chair nettoyée.

3. Procédé selon la revendication 1,
**caractérisé en ce que**
la chair est conditionnée dans des sachets que l'on soumet à une surgélation directe dans un surgélateur à plaques.

4. Procédé selon la revendication 1,
**caractérisé en ce que**
la phase liquide est stockée dans un silo à froid.

5. Procédé selon la revendication 1,
**caractérisé en ce que**
la phase liquide est séparée en huile et en boue par au moins un passage de séparation.

6. Procédé selon la revendication 5,
**caractérisé en ce que**
on effectue éventuellement deux passages de la phase liquide pour séparer les boues et recueillir l'huile que l'on conditionne par inertage et que l'on stocke à froid.

7. Installation pour la mise en oeuvre du procédé- selon l'une quelconque des revendications 1 à 6,
**caractérisée en ce que**
elle comprend une presse à chair (1) recevant les poissons étêtés et éviscérés pour former un mélange dont la presse à chair sépare les chairs d'une part et d'autre part les arêtes et les peaux, un mélangeur (3) muni d'une alimentation en eau froide (4) recevant la chair, un décanteur (6) recevant la chair additionnée d'eau du mélangeur (3) pour séparer la phase liquide chargée et la chair déshuilée, une ensacheuse (7) et des moyens de surgélation de la chair (8) ainsi qu'un silo de stockage de la phase liquide (9) et un séparateur huile/boue (12).

8. Installation selon la revendication 7,
**caractérisée en ce que**
le séparateur (12) est relié à un silo (13) par un circuit (14) pour recevoir l'huile d'un premier passage dans le séparateur (12) et permettre un nouveau passage dans le séparateur (12) avant d'être envoyée à la sortie (S7) pour son stockage.

9. Produit obtenu par la mise en oeuvre du procédé selon l'une quelconque des revendications 1 à 6,
**caractérisé en ce que**
il est formé de chair de poisson déshuilée, obtenue à partir de poissons étêtés et éviscérés ou de déchets de filetage ou de têtes de poisson dont la chair ne contient ni arête ni peau et une teneur en huile inférieure à 3 %.

## Claims

1. Method of extracting fish oil,
**characterised in that**
a) the fish is prepared by removing the head and viscera,
b) the fish is cooled to a low positive temperature and is maintained at a temperature below 15°C during all the operations performed subsequently,
c) a pulp is formed, which is cleaned by removing the bones and skin,
d) water is added to and mixed with the cleaned pulp,
e) the mixture is decanted into a liquid phase and a solid phase,
g) the solid phase (pulp) is processed and deep-frozen,
h) the oil is separated from the liquid phase.

2. Method as claimed in claim 1,
**characterised in that**
between 10 and 40% of water is added to the cleaned pulp.

3. Method as claimed in claim 1,
**characterised in that**
the pulp is packed in bags, which are directly subjected to a deep-freezing process in a plate deep-freezer.

4. Method as claimed in claim 1,
**characterised in that**
the liquid phased is stored in a chilled silo.

5. Method as claimed in claim 1,
**characterised in that**
the liquid phase is separated into an oil and a slurry by passing it through a separation process at least once.

6. Method as claimed in claim 5,
**characterised in that**
the liquid phase is optionally passed through the separation process twice in order to separate the slurry and collect the oil, which is processed to render it inert and placed in cold-storage.

7. Plant for implementing the method as claimed in any one of claims 1 to 6,
**characterised in that**
it comprises a pulp press (1) receiving the fish with the head and viscera removed to form a mixture, which is separated by the pulp press into the pulp on the one hand and the bones and skin on the other, a mixer (3) fitted with a cold water supply (4) receiving the pulp, a decanter (6) receiving the pulp admixed with water from the mixer (3) in order to separate the laden liquid phase and the pulp with the oil removed, a dryer (7) and means for deep-freezing the pulp (8), as well as a silo for storing the liquid phase (9) and an oil/slurry separator (12).

8. Plant as claimed in claim 7,
**characterised in that**
the separator (12) is linked to a silo (13) by a circuit (14) for receiving the oil after it has been passed through the separator (12) a first time and enabling it to be fed through the separator (12) a second time before being despatched to the outlet (S7) in readiness for storage.

9. Product obtained by implementing the method as claimed in any one of claims 1 to 6,
**characterised in that**
it is made up of fish pulp with the oil removed, obtained from fish from which the heads and viscera have been removed or filleting waste or fish heads whose pulp contains neither bones nor skin and has an oil content of less than 3%.

## Patentansprüche

1. Verfahren zur Extraktion von Fischöl, **dadurch gekennzeichnet, dass**
a) der Fisch vorbereitet wird durch Entfernen des Kopfes und seiner Eingeweide,
b) der Fisch auf niedrige positive Temperatur abgekühlt und auf einer Temperatur unterhalb 15°C während aller später durchgeführten Operationen gehalten wird,
c) ein Fleisch geformt wird, das unter Entfernen von Gräten und Haut gereinigt wird,
d) Wasser zum gereinigten Fleisch gegeben wird und durchmischt wird,
e) das Gemisch in eine flüssige Phase und eine feste Phase dekantiert wird,
f) die feste Phase (Fleisch) verpackt und tiefgefroren wird,
g) das Öl von der flüssigen Phase getrennt wird.

2. Verfahren nach Anspruch 1, **dadurch gekennzeichnet, dass** zum gereinigten Fleisch zwischen 10 und 40 % Wasser hinzugefügt wird.

3. Verfahren nach Anspruch 1, **dadurch gekennzeichnet, dass** das Fleisch in Beuteln verpackt wird, die einem direkten Gefriervorgang in einem Plattengefrierer unterzogen werden.

4. Verfahren nach Anspruch 1, **dadurch gekennzeichnet, dass** die flüssige Phase in einem Kühlsilo gespeichert wird.

5. Verfahren nach Anspruch 1, **dadurch gekennzeichnet, dass** die flüssige Phase durch wenigstens einen Trennschritt in Öl und Schlamm aufgetrennt wird.

6. Verfahren nach Anspruch 5, **dadurch gekennzeichnet, dass** gegebenenfalls zwei Durchgänge der flüssigen Phase durchgeführt werden, um die Schlämme abzutrennen und das Öl aufzufangen, das inert abgefüllt und kalt gelagert wird.

7. Anlage zur Durchführung des Verfahrens nach einem beliebigen der Ansprüche 1 bis 6, **dadurch gekennzeichnet, dass** sie umfasst:
eine Fleischpresse (1), die die von Kopf und Eingeweiden befreiten Fische aufnimmt, um ein Gemisch zu bilden, von dem die Fleischpresse einerseits das Fleisch und
andererseits die Gräten und die Haut abtrennt, einen Mischer (3), der mit einer Kaltwasserversorgung (4) versehen ist und das Fleisch aufnimmt, einen Dekantierer (6), der das mit Wasser versetzte Fleisch vom Mischer (3) empfängt, um die beladene flüssige Phase und das entölte Fleisch zu trennen, eine Beutelabfüllvorrichtung (7) und Mittel zum Einfrieren des Fleisches (8) sowie einen Lagersilo für die flüssige Phase (9) und einen Ölschlamm-Abscheider (12).

8. Anlage nach Anspruch 7, **dadurch gekennzeichnet, dass** der Abscheider (12) mit einem Silo (13) über eine Leitung (14) verbunden ist, um das Öl von einem ersten Durchgang durch den Abscheider (12) zu empfangen und einen neuen Durchgang durch den Abscheider (12) zu ermöglichen, bevor es zu seiner Lagerung zum Ausgang (S7) gelenkt wird.

9. Erzeugnis, erhalten durch Anwendung des Verfahrens nach einem beliebigen der Ansprüche 1 bis 6, **dadurch gekennzeichnet, dass** es aus entöltem Fischfleisch gebildet ist, erhalten aus von Kopf und Gräten befreiten Fischen oder Filetierabfällen oder Fischköpfen, wobei das Fleisch weder Gräten noch Haut enthält und einen Ölgehalt von weniger als 3 % hat.
